# EUROPÄISCHE PATENTSCHRIFT

(11) **EP 2 307 776 B1**
(45) Veröffentlichungstag und Bekanntmachung des Hinweises auf die Patenterteilung: **18.07.2012**
(21) Anmeldenummer: 09772217.7
(22) Anmeldetag: 04.05.2009
(51) Int. Cl.: F16K 31/06

(54) **LUFTSPALTBEGRENZUNG BEI MAGNETVENTIL**
AIR GAP BOUNDARY FOR SOLENOID VALVE
DELIMITATION D'ENTREFER D'ELECTROVANNE

(30) Priorität: 02.07.2008 DE 102008040073
(43) Veröffentlichungstag der Anmeldung: 13.04.2011
(73) Patentinhaber: Robert Bosch GmbH, 70442 Stuttgart (DE)
(72) Erfinder: RAPP, Holger, 71254 Ditzingen (DE)
(86) Internationale Anmeldenummer: PCT/EP2009/055342
(87) Internationale Veröffentlichungsnummer: WO 2010/000517

(56) Entgegenhaltungen:
- DE-A1- 4 030 963
- DE-A1- 19 708 104
- US-A1- 2004 090 296
- US-A1- 2005 029 480
- US-A1- 2005 189 512

## Beschreibung

### Stand der Technik

DE 196 50 865 A1 bezieht sich auf ein Magnetventil zur Steuerung des Kraftstoffdrucks in einem Steuerraum eines Einspritzventils, wie z. B. eines Common-Rail-Hochdruckspeichereinspritzsystems. Über den Kraftstoffdruck im Steuerraum wird eine Hubbewegung eines Ventilkolbens gesteuert, mit dem eine Einspritzöffnung des Einspritzventils geöffnet oder geschlossen wird. Das Magnetventil umfasst einen Elektromagneten, einen beweglichen Anker und ein mit dem Anker bewegtes und von einer Ventilschließfeder in Schließrichtung beaufschlagtes Ventilglied. Dieses wirkt mit dem Ventilsitz des Magnetventils zusammen und steuert den Kraftstoffabfluss aus dem Steuerraum.

Bei bekannten Magnetventilen wirkt sich das während des Betriebs vorkommende Schwingen des Ankers und/oder Prellen des Ventilglieds nachteilig aus. Durch ein Nachschwingen der auf dem Ventilsitz auftreffenden Ankerplatte nimmt diese eine undefinierte Lage ein. So kommt es bei nachfolgenden Einspritzungen bei gleicher Ansteuerung zu unterschiedlichen Öffnungszeiten des Magnetventils und somit zu einer Streuung des Einspritzbeginns und der Einspritzmenge. Gemäß DE 196 50 865 A1 sowie der Lösung nach DE 197 08 104 A1 ist der Anker des Magnetventils als zweiteiliger Magnetanker ausgebildet, um so die bewegte Masse der Einheit Anker/Ventilglied und damit die das Prellen verursachende kinetische Energie zu verringern. Der zweiteilig ausgeführte Anker umfasst einen Ankerbolzen und eine auf dem Ankerbolzen gegen die Kraft einer Rückstellfeder in Schließrichtung des Ventilglieds unter Einwirkung ihrer trägen Masse verschiebbar aufgenommene Ankerplatte, welche mittels einer Sicherungsscheibe und einer diese umgebenden Sicherungshülse am Ankerbolzen gesichert ist. Die Sicherungshülse und die Sicherungsscheibe sind vom Magnetkern umschlossen, wodurch sich jedoch ein erhöhter Platzbedarf ergibt, was zu einem höheren Durchmesser im Magnetkern führt. Aufgrund des höheren Durchmessers des Magnetkerns wiederum ergibt sich eine Begrenzung des magnetischen Flusses.

Das Dokument US 20050 189512 A1 zeigt ein Magnet ventil gemäß dem Oberbegriff von Anspruch 1.

Bei Magnetventilen zum Einsatz an Hochdruckspeicher-Einspritzsystemen (Common-Rail) ist es besonders kostengünstig, den oberen Hubanschlag des Ventilelements, d. h. des Ankers einer Ankerbaugruppe, am Magnetkern auszubilden. Um ein magnetisch oder hydraulisch bedingtes Kleben zu vermeiden, soll andererseits in aktivem Zustand noch ein geringfügiger Abstand zwischen dem Ventilelement und dem Magnetkern bestehen. Zwischen diesen beiden Anforderungen gilt es einen tragfähigen Kompromiss zu finden. Eine Möglichkeit besteht darin, die Kontaktfläche zwischen dem Ventilelement und dem Magnetkern auf einen Bruchteil der gesamten Polfläche an der Stirnseite des Magnetkerns zu beschränken. Dies wird dadurch erreicht, dass entweder in die Polfläche des Magnetkerns oder in eine Polfläche des Ankers ein Absatz eingeschliffen ist, sodass der verbleibende Luftspalt nur an einem kleinen Teil der Polfläche tatsächlich gleich Null ist und ansonsten durch die Höhe des Absatzes vorgegeben ist.

Dabei ist zum einen die Dimensionierung der Anschlagfläche schwierig, da wegen des magnetischen/hydraulischen Klebens eine sehr kleine Anschlagfläche verlangt wird, die jedoch wieder zum Prellen des Ventilelements bei Erreichen seines oberen Hubanschlags führen kann. Ein weiteres Problem besteht darin, die Haltbarkeit der Anschlagflächen zu garantieren, insbesondere dann, wenn der Magnetkern aus einem sehr weichen Material gefertigt ist. Hier sind oftmals wiederum kostenintensive Zusatzmaßnahmen zur Verbesserung der Standfestigkeit der Anschlagflächen notwendig.

Eine weitere Möglichkeit, einen möglichst geringen Restabstand zu gewährleisten und dauerhaft beizubehalten, liegt im Einlegen einer dünnen, aus amagnetischem Material gefertigten Scheibe zwischen dem Ventilelement und dem Magnetkern. Diese Scheibe weist üblicherweise eine Dicke von weniger als 0,1 mm auf. Die Form dieser Scheibe ist so ausgelegt, dass ein Prellen des Ventilelements beim Anschlagen am Magnetkern durch hydraulische Dämpfung vermieden wird. Bei dieser Lösung kann es beim Schließvorgang des Magnetventils zum Haften der Scheibe am Ventilelement, d. h. am Anker und/oder am Magnetkern kommen, wobei die Ausprägung des sich einstellenden Haftens die Wiederbefüllung des Spaltes zwischen dem Ventilelement und dem Kern (Quetschspalt) und damit den Schließvorgang des Ventilelements beeinflusst. Die Folge ist eine veränderliche, nicht reproduzierbare Ventildynamik beim Schließvorgang von Ansteuerung zu Ansteuerung und/oder von Injektor zu Injektor und eine verlängerte Schließdauer des Ventilelements.

### Offenbarung der Erfindung

Durch die erfindungsgemäß (in Anspruch 1) vorgeschlagene Lösung kann eine Stabilisierung, d. h. eine erhebliche Verbesserung der Reproduzierbarkeit der Schaltvorgänge eines Magnetventils zur Betätigung eines Kraftstoffinjektors erreicht werden, ohne dass hierzu zusätzliche Prozessschritte erforderlich wären und ohne zusätzliche Kosten zu bewirken. Erfindungsgemäß wird vorgeschlagen, dass die Stirnseite des Magnetkerns oder eine der Stirnseite des Magnetkerns gegenüberliegende Ankerpolfläche des Ankers zumindest in einem bestimmten Bereich eine von einer planen Ebene abweichende geneigt und/oder kurvenförmig verlaufende Fläche aufweist. Dadurch wird erreicht, dass ein Kontakt zwischen der Stirnseite des Magnetkerns, in den die Magnetspule eingebettet ist, und der Planseite des Ankers und der ihm zugeordneten Scheibe nur noch entlang einer kreisförmigen Linie am Innenrand der Scheibe und nicht mehr auf der kompletten Oberfläche der Scheibe herbeigeführt wird. Hierdurch wird auch die Haftfähigkeit einer zwischen Magnetkern und Ventilelement liegenden Scheibe an zumindest einem Element des Magnetkreises, sei es Magnetkern oder Ventilelement, gezielt gering gehalten. Für den Fall, dass die den Abstand zwischen der Stirnseite des Magnetkerns und der Planseite des Ankers definierende Scheibe nicht rotationssymmetrisch, sondern mit Aussparungen entlang des Außenrandes ausgeführt ist, beschränkt sich der Kontakt nur auf eine unterbrochene Linie oder auf einzelne Kontaktpunkte. Je kleiner die Kontaktfläche ist, die sich zwischen dem bewegten Anker und der den Abstand zwischen der Planseite des Ankers und der Stirnseite des Magnetkerns definierenden Scheibe einstellt, desto geringer ist die Gefahr des hydraulischen Klebens, welches das Schließen eines Ventilelements negativ beeinflussen würde.

Erfindungsgemäß ist die Ankerpolfläche des Ankers (teilweise) konvex ausgebildet. Die erfindungsgemäß vorgeschlagene konvexe Oberflächenkontur des Ankers kann zum Beispiel durch Schleifen der Polfläche direkt hergestellt werden und erfordert keinen zusätzlichen Prozessschritt.

Die erfindungsgemäße Form des Spalts zwischen dem Magnetkern und dem Ventilelement wird dadurch erreicht, dass eine Kontur der Stirnseite des Magnetkerns oder der Ankerpolfläche des Ankers mit mit Bezug auf den Längsschnitt zumindest in einem bestimmten Abschnitt geneigt und in einem weiteren Abschnitt konvex verläuft.

Ein identischer Effekt kann dadurch erreicht werden, dass zumindest ein Teil der Kontur der Stirnseite des Magnetkerns oder der Ankerpolfläche ausgehend von der Achse des Ankers in Richtung der radialen äußeren Begrenzung der Ankerplatte konvex und der sich daran anschließende Teil plan ausgebildet ist und sich gegenüberliegende Teile dieser Flächen mit annähernd gleichem Abstand zueinander angeordnet sind. Durch die erfindungsgemäß vorgeschlagene Lösung wird in jedem Fall die Haftfähigkeit der Scheibe mit ihrer dem Anker bzw. dessen Planseite zugewandten Seite erheblich herabgesetzt. Wird eine EbenheitsAbweichung der Planseite des Ankers klein gehalten, so besteht kurz vor Erreichen des Anschlags demnach ein sehr geringer Spalt zwischen der Planseite des Ankers und der Scheibe, aus welchem der Kraftstoff verdrängt werden muss und der gemeinhin als Quetschspalt bezeichnet wird. Dieser dient der hydraulischen Dämpfung zur Vermeidung eines Prellens des Ventilelements beim Erreichen seines oberen Hubanschlags. Unter Prellen wird nachfolgend ein ungewolltes Wiederverlassen eines einmal erreichten Anschlags durch ein Ventilelement verstanden, was durch ein Nachschwingen bewegter Komponenten ausgelöst wird.

Im Zusammenhang mit der erfindungsgemäßen Ausbildung und Anordnung ist es von Vorteil, dass zwischen der Stirnseite des Magnetkerns und der Ankerpolfläche die Restluftspaltscheibe aufgenommen ist, die mit Bezug auf die Mittelachse der Ankerpatte rotationssymmetrisch oder mit Aussparungen ausgeführt ist.

Erfindungsgemäß ist der Abstand zwischen einem Außenpol des Magnetkerns und der Ankerpolfläche größer ist als der Abstand zwischen einem Innenpol des Magnetkerns und der Ankerpolfläche. Je kleiner die Kontaktfläche ist, die sich zwischen dem bewegten Anker und der den Abstand zwischen der Planseite des Ankers und der Stirnseite des Magnetkerns definierenden Scheibe einstellt, desto geringer ist die Gefahr des hydraulischen Klebens.

Vorteilhaft ist es hierzu auch, dass der Abstand zwischen der Ankerpolfläche des Ankers und der Oberfläche der Stirnseite des Magnetkerns und/oder der Restluftspaltscheibe in Richtung der radialen äußeren Begrenzung des Ankers zunimmt und die Restluftspaltscheibe mit einer ersten Planfläche am Anschlag eines Innenpols des Magnetkerns der Magnetgruppe anliegt. Damit steigt auch der Strom, der benötigt wird, um das Ventilelement gegen die Wirkung einer Federkraft, die durch eine Schließfeder erzeugt wird, in geöffnetem Zustand zu halten. Dieser geringfügige Nachteil ist aber im Vergleich zur Verbesserung der Ventildynamik gering.

Eine zusätzliche Möglichkeit ist gemäß einer Weiterbildung der Erfindung, dass sich zwischen einer zweiten Planseite der Restluftspaltscheibe und einer konvexen Kontur ein durchgehender oder unterbrochener Kontaktring und zwischen der zweiten Planseite der Restluftspaltscheibe und der Ankerpolfläche bei Annäherung der Ankerpolfläche an die Restluftspaltscheibe ein Quetschspalt bildet. Hierdurch wird in vorteilhafter Weise eine hydraulische Dämpfung zur Vermeidung eines Prellens des Ventilelements während des Erreichens des oberen Hubanschlags erreicht.

Von Vorteil ist ferner, dass die Restluftspaltscheibe aus amagnetischem Material gefertigt ist. Diese Scheibe weist eine Dicke von weniger als 0,1 mm auf. Die Form dieser Scheibe ist so ausgelegt, dass ein Prellen des Ventilelements beim Anschlagen am Magnetkern durch hydraulische Dämpfung vermieden wird. Aufgrund der Dicke der Restluftspaltscheibe wird ein Luftspalt erzeugt, dessen Spalthöhe der Dicke der Restluftspaltscheibe entspricht. Des Weiteren ist vorteilhaft, die Ankerpolfläche und die Stirnseite des Magnetkerns plan auszubilden und statt dessen die Dicke der Restluftspaltscheibe nach außen hin abnehmend zu gestalten. Damit lässt sich in vorteilhafter Weise der gleiche Effekt erreichen wie mit dem Ausbilden einer konvexen Kontur im Bereich der Ankerpolfläche.

### Kurze Beschreibung der Zeichnungen

Anhand der Zeichnungen wird die Erfindung nachstehend eingehender beschrieben.

Es zeigt:
- Figur 1: eine Magnetgruppe eines Magnetventils gemäß des Stands der Technik, bei welchem ein Anker einen Absatz aufweist,
- Figur 2: eine weitere Ausführungsform einer Magnetgruppe mit einer einen Restluftspalt definierenden Restluftspaltscheibe zwischen der Stirnseite des Magnetkerns und der Ankerpolfläche,
- Figur 3a: nicht erfindungsgemäße, konvex verlaufende Kontur an der Ankerpolfläche, welche der Stirnseite des Magnetkerns der Magnetgruppe zugewandt ist,
- Figur 3b: erfindungsgemäß vorgeschlagene abschnittsweise linear und konvex verlaufenden Kontur an der Ankerpolfläche, welche der Stirnseite des Magnetkerns der Magnetgruppe zugewandt ist,
- Figur 3c: nicht erfindungsgemäße, konvex - konkav verlaufenden Kontur an der Ankerpolfläche, welche der Stirnseite des Magnetkerns der Magnetgruppe zugewandt ist,
- Figur 4a: die erfindungsgemäß vorgeschlagene Restluftspaltscheibe,
- Figur 4b: eine weitere Ausführungsform der erfindungsgemäß vorgeschlagenen Restluftspaltscheibe, die an ihrem Innenrand mit einzelnen Schlitzen versehen ist.

### Ausführungsformen

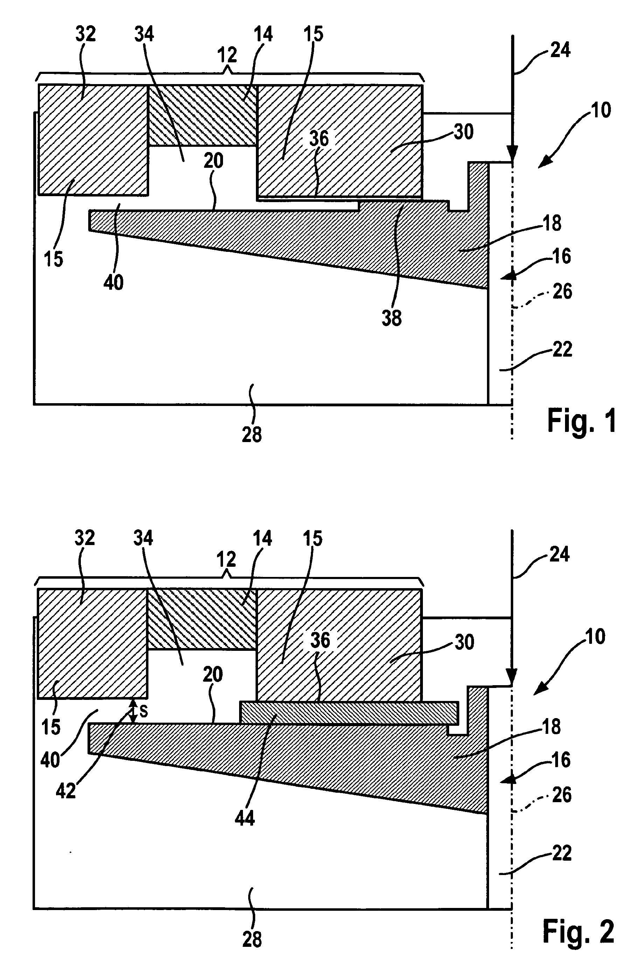

Der Darstellung gemäß Figur 1 ist zu entnehmen, dass ein Magnetventil 10, mit dem insbesondere ein Kraftstoffinjektor eines Hochdruckspeicher-Einspritzsystems (Common-Rail) betätigt werden kann, eine Magnetgruppe 12 aufweist. Die Magnetgruppe 12 ihrerseits umfasst eine in einen Magnetkern 15 eingebettete Magnetspule 14.

Der Stirnseite des Magnetkerns 15 gegenüberliegend befindet sich eine Ankergruppe 16, die eine Ankerplatte 18 aufweist. Deren Planseite 20 zeigt in der Darstellung gemäß Figur 1 in Richtung eines Anschlags 36 an der Stirnseite des Magnetkerns 15. Die Ankerplatte 18 weist darüber hinaus ein in der Darstellung gemäß Figur 1 nur angedeutetes Ventilelement 22 auf, welches z. B. hülsenförmig ausgebildet ist. Das Ventilelement 22 verschließt oder öffnet einen nicht dargestellten Ventilsitz, über den ein unter Systemdruck stehender mit Kraftstoff 28 beaufschlagter Steuerraum druckentlastet oder druckbeaufschlagt wird. Die Ankerplatte 18 der Ankergruppe 16 ist mit einer Schließkraft 24 beaufschlagt, die über eine in Figur 1 nicht dargestellte Schließfeder erzeugt wird. Die Magnetgruppe 12 erzeugt eine der Schließkraft 24 entgegengerichtete Magnetkraft, mit welcher die Ankerplatte 18 der Ankergruppe 16 mit daran aufgenommenem Ventilelement 22 entgegen der Wirkung der Schließkraft 24 geöffnet wird, sodass aus dem erwähnten Steuerraum Kraftstoff abströmt.

Die in Figur 1 dargestellte Magnetgruppe 12 ist symmetrisch zu einer Achse 26 aufgebaut, wobei sich die Ankergruppe 16 ebenso wie die Magnetgruppe 12 in einem mit Kraftstoff 28 befüllten Niederdruckraum befindet. In diesen Niederdruckraum wird der beim Öffnen eines Ventilsitzes durch das Ventilelement 22 abgesteuerte Kraftstoff 28 geleitet, der demzufolge die Magnetgruppe 12 sowie die Ankergruppe 16 umgibt. Aus der Darstellung gemäß Figur 1 geht darüber hinaus hervor, dass die der Planseite 20 der Ankerplatte 18 zugewandte Stirnseite der Magnetgruppe 12 die zurückspringend angeordnete Magnetspule 14 aufweist, die einen Innenpol 30 des Magnetkerns 15 von dessen Außenpol 32 trennt. Die sich durch die zurückspringende Anordnung der Magnetspule 14 ergebende Stufe ist durch das Bezugszeichen 34 kenntlich gemacht. Figur 1 ist des Weiteren noch zu entnehmen, dass sich am Innenpol 30 der Anschlag 36 befindet, der z. B. als separater Ring oder dergleichen ausgebildet sein kann. Die Planseite 20 der in Figur 1 dargestellten Ankerplatte 18 weist darüber hinaus einen eingeschliffenen Absatz 38 auf, welcher das Pendant zum ringförmig konfigurierten Anschlag 36 am Innenpol 30 des Magnetkerns 15 bildet.

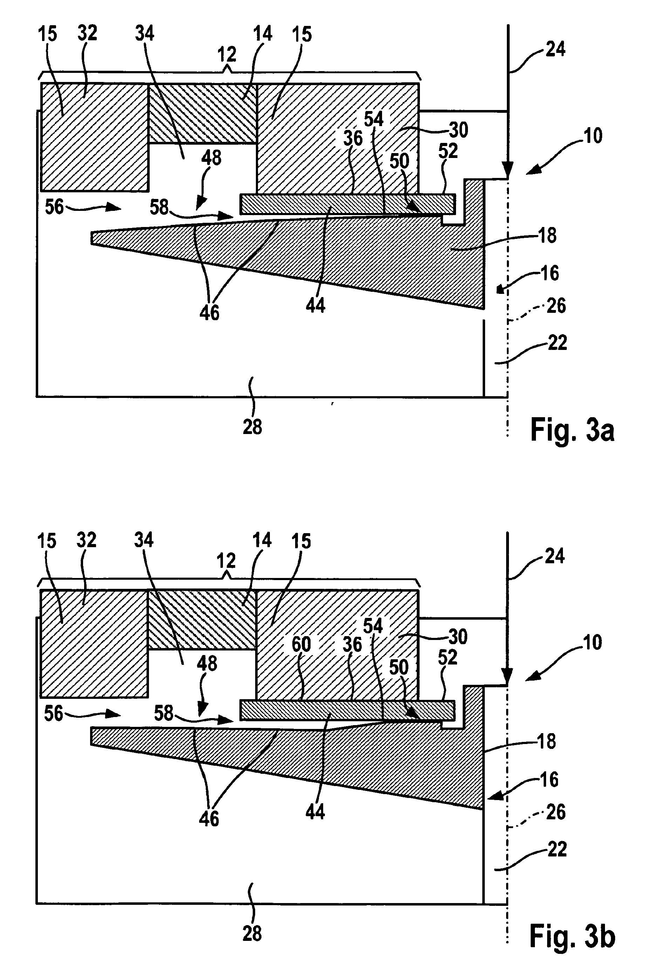

Figur 2 zeigt ein Magnetventil gemäß des Stands der Technik, bei dem zur Einstellung eines Restluftspalts zwischen der Stirnseite des Magnetkerns 15 und der planausgebildeten Planseite 20 der Ankerplatte 18 eine Restluftspaltscheibe 44 verwendet wird. Die Restluftspaltscheibe 44 wird in der Regel aus einem amagnetischen Material gefertigt und weist eine Dicke von etwa 0,1 mm auf. Aufgrund der Dicke der Restluftspaltscheibe 44 wird ein Luftspalt 40 erzeugt, dessen Spalthöhe 42 der Dicke der Restluftspaltscheibe 44 entspricht. Die Restluftspaltscheibe 44 aus amagnetischem Material liegt sowohl am Anschlag 36 des Innenpols 30, der plan verläuft, als auch auf der Planseite 20 der Ankerplatte 18, gemäß Figur 3a an. Auch die Ankerplatte 18 sowie die Magnetgruppe 12 gemäß der Konfiguration in Figur 2 befinden sich im Niederdruckraum eines Kraftstoffinjektors und ist von Kraftstoff 28 umgeben. Die Magnetgruppe 12, das Ventilelement 22 sowie die mit dem Ventilelement 22 in Verbindung stehende Ankerplatte 18 sind symmetrisch zur Achse 26 ausgeführt.

Der Darstellung gemäß Figur 3b ist die erfindungsgemäß vorgeschlagene Lösung eines Magnetventils zu entnehmen.

Wie (die nicht erfindungsgemäße Ausführungsform in) Figur 3a zeigt, umfasst das Magnetventil 10 ebenfalls die Magnetgruppe 12, in der die Magnetspule 14 eingebettet ist. Durch die Magnetspule 14 wird die der Ankerplatte 18 zugewandte Stirnseite des Magnetkerns 15 in den Innenpol 30 und den Außenpol 32 geteilt. In Bezug auf den Innenpol 30 und den Außenpol 32 ist die Magnetspule 14 durch die Stufe 34 zurückspringend angeordnet. Der Innenpol 30 stellt den Anschlag 36 für eine erste Oberfläche 52 der Restluftspaltscheibe 44 dar.

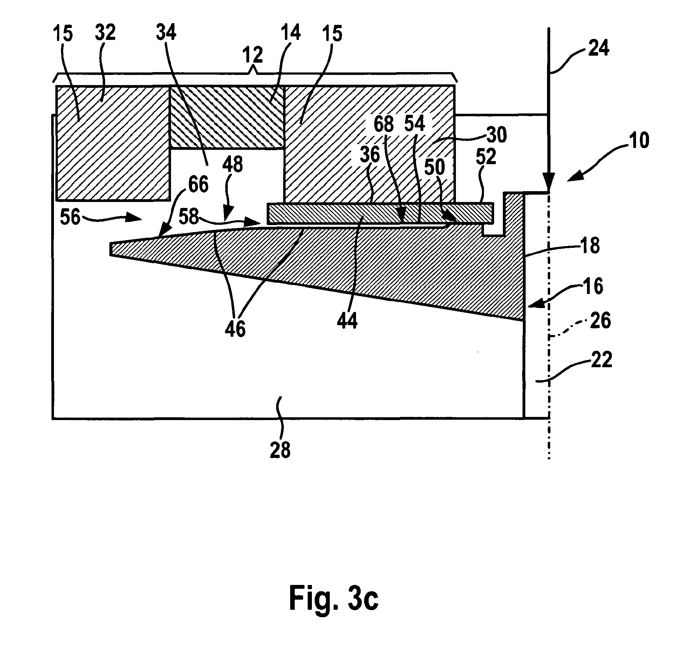

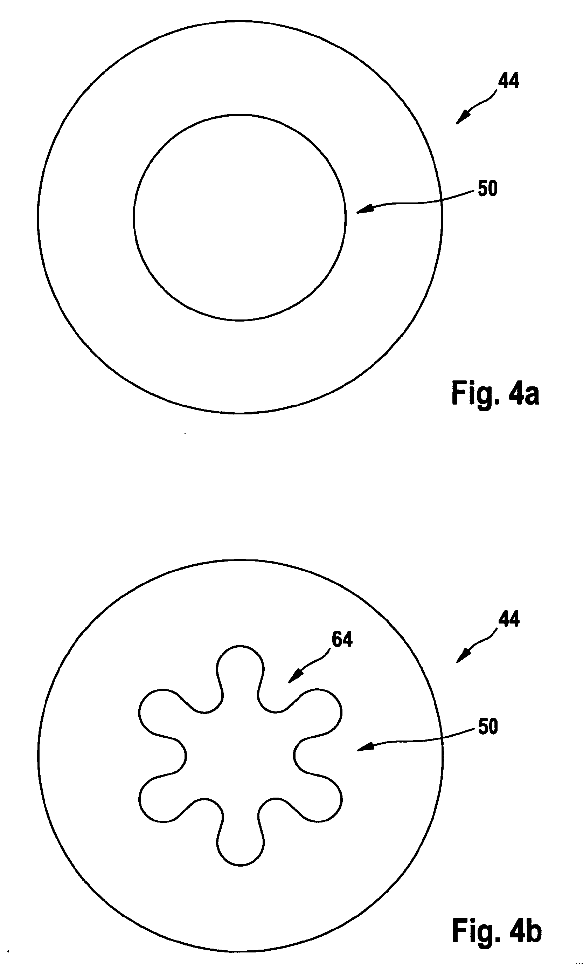

Wie Figur 3a des Weiteren zeigt, weist die Ankerplatte 18 eine Ankerpolfläche 46 auf, die eine konvexe Kontur 48 aufweist. Die konvexe Kontur 48 an der Ankerpolfläche 46 der Ankerplatte 18 bewirkt, dass sich bei Annäherung der Ankerpolfläche 46 an eine zweite Planseite 54 der Restluftspaltscheibe 44 lediglich in dessen Innenbereich ein Kontaktring 50 ausbildet. Dadurch ist die Kontaktfläche gemäß Figur 3a und 4a zwischen der Ankerpolfläche 46 und der zweiten Planseite 54 der Restluftspaltscheibe 44 im Vergleich zu den Lösungen gemäß des Stands der Technik um ein Vielfaches geringer, sodass hydraulisches Kleben signifikant reduziert, im Idealfall vollständig vermieden werden kann. Anstelle des in Figur 3 4b angedeuteten ringförmigen Kontaktbereichs 50 zwischen der konvexen Kontur 48 der Ankerpolfläche 46 der zweiten Planseite 54 der Restluftspaltscheibe 44 können auch einzelne Kontaktpunkte zwischen der konvexen Kontur 48 der Ankerpolfläche 46 und der zweiten Oberfläche 54 der geschaffen werden. Zu diesem Zweck ist die Restluftspaltscheibe 44, die bevorzugt aus amagnetischem Material gefertigt wird, an ihrem Innenrand gemäß Fig. 4b mit einzelnen Schlitzen 64 zu versehen.

Die Schlitze 64 können sich gemäß Fig. 4b in etwa keilförmig radial zur Mittelachse erstrecken und an den Übergängen zwischen zwei benachbarten Schlitzen abgerundet sein. Ferner ist es möglich, dass die Seitenflächen der Schlitze 44 spitz aufeinander zu laufen. Dadurch ergeben sich einzelne Kontaktpunkte zwischen der konvexen Kontur 48 der Ankerplatte 18 und der Restluftspaltscheibe 44. Die Ankerpolfläche 46 und die durch die Schlitze 46 voneinander getrennten Zungen im verbleibenden Material der Restluftspaltscheibe 44 bestehen vorzugsweise aus amagnetischem Werkstoff.

Bei der Ausführungsform gemäß Fig. 3b ist die Kontur 48 an der Ankerpolfläche, welche der Stirnseite des Magnetkerns der Magnetgruppe zugewandt ist, im vorderen Abschnitt 64 linear ausgebildet und nach ca. zwei Dritteln des linearen Abschnitts 66 konvex ausgebildet. Hiermit werden ebenfalls sehr gute Ergebnisse erzielt. Das gilt auf für die Ausführungsform der erfindungsgemäß vorgeschlagenen abschnittsweise konvex 66 - konkav 68 verlaufenden Kontur an der Ankerpolfläche gemäß Fig. 3c, welche der Stirnseite des Magnetkerns der Magnetgruppe zugewandt ist.

Durch die erfindungsgemäß vorgeschlagene konvexe Kontur 48 wird die Haftfähigkeit der Restluftspaltscheibe 44 in Bezug auf die Ankerpolfläche 46 des Ankers 18 erheblich herabgesetzt. Kann die Ebenheitsabweichung der Ankerpolfläche 46 des Ankers 18 klein gehalten werden, so besteht kurz vor dem Erreichen des Anschlags 36, d. h. des Kontaktrings 50 bzw. der sich ausbildenden Kontaktpunkte, trotzdem ein sehr enger zwickelförmiger Quetschspalt 58, aus dem ein Volumen von Kraftstoff 28 mit hoher Strömungsgeschwindigkeit herausgepresst werden muss. Der zwickelförmig ausgebildete Quetschspalt 58, der sich aufgrund der konvexen Kontur 48 zwischen der zweiten Planseite 54 der Restluftspaltscheibe 44 und der Ankerpolfläche 46 einstellt, läuft ausgehend vom Kontaktring 50 bzw. den sich einstellenden Kontaktpunkten in radialer Richtung nach außen. Der zwickelförmige Quetschspalt 58 öffnet sich demnach in radialer Richtung nach außen. Aufgrund des im Quetschspalt 58 enthaltenen Kraftstoffvolumens, welches bei der Annäherung der Ankerpolfläche 46 an die Restluftspaltscheibe 44 aus dem Quetschspalt 58 herausgepresst werden muss, kann somit nach wie vor die Vermeidung von Prellerscheinungen des Ventilelements 22 beim Erreichen des oberen Hubanschlags, d. h. der Restluftspaltscheibe 44, gewährleistet werden.

Vorteilhaft ist es auch, dass ein Abstand 56 gemäß Figur 3a zwischen einem Außenpol 32 des Magnetkerns 15 und der Ankerpolfläche 46 größer ist als der Abstand zwischen einem Innenpol 30 des Magnetkerns 15 und der Ankerpolfläche 46.

Die konvexe Kontur 48 der Ankerpolfläche 46 wird zum Beispiel beim Schleifen der Ankerpolfläche 46 direkt hergestellt und erfordert keinen zusätzlichen Prozessschritt.

Die in Figur 3 dargestellte Ausbildung des Magnetventils 10 führt zu einer erheblichen Stabilisierung der Schaltvorgänge des Magnetventils 10, ohne dass hierzu zusätzliche Prozessschritte erforderlich sind und ohne dass zusätzliche Kosten entstehen. Wenngleich eine die konvexe Kontur 48 aufweisende Ankerpolfläche 46 beschrieben wird, so kann die konvexe Kontur 48 ebenso gut nach dem Prinzip der kinematischen Umkehr an der Stirnseite der Magnetgruppe 12, insbesondere an der Stirnseite des Magnetkerns 15, ausgeführt sein. Des Weiteren ist durchaus denkbar, die Ankerpolfläche 46 und die Stirnseite des Magnetkerns 15 plan auszubilden und statt dessen die Dicke der Restluftspaltscheibe 44 nach außen hin abnehmend zu gestalten. Damit lässt sich der gleiche Effekt erreichen wie mit dem Ausbilden einer konvexen Kontur 48 im Bereich der Ankerpolfläche 46 oder alternativ in der Stirnseite des Magnetkerns 15, die in Richtung der Ankergruppe 16 zeigt.

## Patentansprüche

1. Magnetventil (10) mit einer Magnetgruppe (12), eine Magnetspule (14) und einen Magnetkern (15) umfassend, und mit einem Anker (18) sowie einem Ventilelement (22), ferner einem Anschlag (36) im Bereich einer Stirnseite des Magnetkerns (15), wobei eine der Stirnseite des Magnetkerns (15) gegenüberliegende Ankerpolfläche (46) des Ankers (18) zumindest in einem bestimmten Bereich eine von einer planen Ebene abweichende geneigte und/oder kurvenförmig verlaufende Fläche aufweist, und wobei ein Abstand (56) zwischen einem Außenpol (32) des Magnetkerns (15) und der Ankerpolfläche (46) größer ist als der Abstand zwischen einem Innenpol (30) des Magnetkerns (15) und der Ankerpolfläche (46), **dadurch gekennzeichnet, dass** die Ankerpolfläche (46) in einem vorderen (radial) nach außen weisenden Abschnitt (64) linear und nach etwa zwei Drittel des linearen Abschnitts (64) konvex ausgebildet ist.

2. Magnetventil nach Anspruch 1, **dadurch gekennzeichnet, dass** zwischen der Stirnseite des Magnetkerns (15) und der Ankerpolfläche (46) eine Restluftspaltscheibe (44) aufgenommen ist.

3. Magnetventil nach Anspruch 2, **dadurch gekennzeichnet, dass** die Restluftspaltscheibe (44) mit Bezug auf die Mittelachse (26) der Ankerpatte (18) rotationssymmetrisch oder mit Aussparungen (62) ausgeführt ist.

4. Magnetventil nach Anspruch 2 oder 3, **dadurch gekennzeichnet, dass** die Restluftspaltscheibe (44) mit einer ersten Planfläche (52) am Anschlag (36) eines Innenpols (30) des Magnetkerns (15) der Magnetgruppe (12) anliegt.

5. Magnetventil nach Anspruch 4, **dadurch gekennzeichnet, dass** sich zwischen einer zweiten Planseite (54) der Restluftspaltscheibe (44) und einer konvexen Kontur (48) ein durchgehender oder unterbrochener Kontaktring (50) bildet.

6. Magnetventil nach Anspruch 5, **dadurch gekennzeichnet, dass** sich zwischen der zweiten Planseite (54) der Restluftspaltscheibe (44) und der Ankerpolfläche (46) bei Annäherung der Ankerpolfläche (46) an die Restluftspaltscheibe (44) ein Quetschspalt (58) bildet.

7. Magnetventil nach einem der Ansprüche 2 bis 6, **dadurch gekennzeichnet, dass** die Restluftspaltscheibe (44) aus amagnetischem Material gefertigt ist.

## Claims

1. Solenoid valve (10) having a magnet assembly (12) comprising a magnet coil (14) and a magnet core (15), and having an armature (18) and also a valve element (22) as well as a stop (36) in the region of an end side of the magnet core (15), with an armature pole face (46) of the armature (18), which armature pole face is situated opposite the end side of the magnet core (15), having a surface, which runs in an inclined and/or curved manner which differs from a flat plane, at least in a specific region, and with a distance (56) between an outer pole (32) of the magnet core (15) and the armature pole face (46) being greater than the distance between an inner pole (30) of the magnet core (15) and the armature pole face (46), **characterized in that** the armature pole face (46) is linear in a front, radially outwardly facing section (64) and convex after approximately two thirds of the linear section (64).

2. Solenoid valve according to Claim 1, **characterized in that** a residual air gap disc (44) is accommodated between the end side of the magnet core (15) and the armature pole face (46).

3. Solenoid valve according to Claim 2, **characterized in that** the residual air gap disc (44) is designed to be rotationally symmetrical with respect to the centre axis (26) of the armature plate (18) or is designed with cutouts (62).

4. Solenoid valve according to Claim 2 or 3, **characterized in that** the residual air gap disc (44) bears against the stop (36) of an inner pole (30) of the magnet core (15) of the magnet assembly (12) by way of a first flat face (52).

5. Solenoid valve according to Claim 4, **characterized in that** a continuous or interrupted contact ring (50) is formed between a second flat side (54) of the residual air gap disc (44) and a convex contour (48).

6. Solenoid valve according to Claim 5, **characterized in that** a squeeze gap (58) is formed between the second flat side (54) of the residual air gap disc (44) and the armature pole face (46) as the armature pole face (46) approaches the residual air gap disc (44).

7. Solenoid valve according to one of Claims 2 to 6, **characterized in that** the residual air gap disc (44) is produced from amagnetic material.

## Revendications

1. Électrovanne (10) équipée d'un groupe aimanté (12) comprenant une bobine d'aimant (14) et un noyau d'aimant (15), et équipée d'une ancre (18) ainsi que d'un élément de vanne (22), ainsi que d'une butée (36) placée dans la zone d'un côté avant du noyau d'aimant (15), une surface de pôle d'ancre (46) de l'ancre (18) opposée au côté avant du noyau d'aimant (15) comportant au moins dans une zone définie une surface inclinée s'écartant par rapport à un plan et/ou s'étendant en forme de courbe et un écartement (56) observé entre un pôle extérieur (32) du noyau d'aimant (15) et la surface de pôle d'ancre (46) étant plus important que l'écartement observé entre un pôle intérieur (30) du noyau d'aimant (15) et la surface de pôle d'ancre (46), **caractérisée en ce que** la surface de pôle d'ancre (46) est réalisée de façon linéaire dans une section (64) avant orientée vers l'extérieur dans le plan radial et de façon convexe approximativement aux deux tiers de la section (64) linéaire.

2. Électrovanne selon la revendication 1, **caractérisée en ce qu'**un disque d'entrefer (44) est logé entre le côté avant du noyau d'aimant (15) et la surface de pôle d'ancre (46).

3. Électrovanne selon la revendication 2, **caractérisée en ce que** le disque d'entrefer (44) est réalisé symétriquement en rotation par rapport à l'axe central (26) de la plaque d'ancrage (18) ou avec des évidements (62).

4. Électrovanne selon la revendication 2 ou 3, **caractérisée en ce que** le disque d'entrefer (44) repose avec une première surface plane (52) contre la butée (36) d'un pôle intérieur (30) du noyau d'aimant (15) du groupe aimanté (12).

5. Électrovanne selon la revendication 4, **caractérisée en ce qu'**une bague de contact (50) continue ou interrompue se forme entre un deuxième côté plan (54) du disque d'entrefer (44) et un contour (48) convexe.

6. Électrovanne selon la revendication 5, **caractérisée en ce qu'**un interstice de serrage (58) se forme entre le deuxième côté plan (54) du disque d'entrefer (44) et la surface de pôle d'ancre (46) dès lors que la surface de pôle d'ancre (46) est approchée du disque d'entrefer (44).

7. Électrovanne selon l'une quelconque des revendications 2 à 6, **caractérisée en ce que** le disque d'entrefer (44) est fabriqué à partir d'un matériau non aimanté.
